# EUROPEAN PATENT APPLICATION

(11) **EP 4 311 697 A1**
(43) Date of publication of application: **31.01.2024**
(21) Application number: 22187639.4
(22) Date of filing: 28.07.2022
(51) Int. Cl.: B60D 1/54, B60D 1/06, B60D 1/62, B60D 1/24

(54) **A TOWING HOOK ARRANGEMENT AND A METHOD FOR A TOWING HOOK ARRANGEMENT**

(71) Applicant: Brink Towing Systems B.V., 7951 CX Staphorst (NL)
(72) Inventor: KEIJER, Maarten, 7951 CX Staphorst (NL); VESELOVS, Roberts, 7951 CX Staphorst (NL)
(74) Representative: Valea AB

(57) **Abstract**

The present disclosure relates to a towing hook arrangement (1) for determining an end-of-movement of a retractable towing hook (130). A sensor unit (70) is arranged to determine a load of an electrically driven actuator mechanism (100) and to communicate the determined load to a control unit (60). At least one damping element (80, 180, 280) is configured to retard relative movement of at least two mechanically cooperating parts (110, 120, 130, 170) as the two mechanically cooperating parts (110, 120, 130, 170) approach each other at the end-of-movement between a stowed position and a deployed position.

## Description

### TECHNICAL FIELD

The present disclosure relates to a towing hook arrangement for predicting an end-of-movement of a retractable towing hook and to a method therefore. The present disclosure also relates to a vehicle comprising such a towing hook arrangement.

### BACKGROUND

Retractable towing hooks are actuated by electric motors to move between two end positions, i.e a deployed position for a towing or carrying an object, and a stowed position in which the towing hook is stowed away and usually out of sight. The electric motor energizes an actuation mechanism to perform the movement of the towing hook. The electric motor and the actuation mechanism may comprise a plurality of mechanically cooperating parts, some of which come into abutment at an end-of-movement between the end positions. Because all parts are rigid there is a very sudden transition from free movement to all parts being in contact and locked. The transition is so sudden that a control unit (ECU) typically does not have enough time to respond., which leads to a very rapid increase in the load of the electric motor which may in turn lead to harmful currents and torque in the electric motor before the control unit has time to respond and switch off the motor.

Some prior art solutions solve the problem of the abrupt stop by using pulse width modulation to slow down the movement of the towing hook as it approaches the end positions. Other prior art solutions, such as DE10201520490, involves using a characteristic speed gradient curve of a particular towing hook, which curve is stored as a reference and compared to an actual speed gradient. The comparison tells the system when to stop the movement. The abruptness of the stop remains a problem because the control unit has very little time to respond.

### SUMMARY

Therefore, an object of the disclosure is to provide an improved towing hook arrangement and a method of controlling the same. More specifically, an object of the disclosure is to provide a towing hook arrangement for a retractable towing hook which is able to handle the movement of the towing hook such as to prevent an abrupt stop and resulting peak drive currents and high torques as the towing hook reaches an end position. Another object of the disclosure is to provide method of controlling the towing hook arrangement.

According to a first aspect of the present disclosure, the object is at least partly achieved by a towing hook arrangement according to claim 1.

Hence, there is provided a towing hook arrangement for determining an end-of-movement of a retractable towing hook. The towing hook arrangement comprises a retractable towing hook movable between a stowed position and a deployed position. The towing hook arrangement further comprises an electrically driven actuator mechanism for moving the towing hook between the stowed position and the deployed position. The actuator mechanism comprises at least two mechanically cooperating parts movable into abutment with each other at an end-of-movement between the stowed position and the deployed position. The towing hook arrangement also comprises a control unit for controlling the electrically driven actuator mechanism. The towing hook arrangement further comprises a sensor unit arranged to determine a load of the electrically driven actuator mechanism and to communicate the determined load to the control unit, and at least one damping element configured to retard relative movement of the at least two mechanically cooperating parts as the two mechanically cooperating parts approach each other by the end-of-movement between the stowed position and the deployed position.

The stowed position and the deployed positions each define an end position as the towing hook moves from the other of the two positions. The end-of-movement of the retractable towing hook is to be understood as the last part of the movement, which is limited by an end position as the retractable towing hook approaches that end position. The electrically driven actuator mechanism may comprise a plurality of mechanically cooperating parts. Towards an end-of-movement, at least two mechanically cooperating parts move into abutment with each other, which would cause an abrupt mechanical stop in the system. However, due to the damping element, the end-of-movement is retarded, or dampened, before the two cooperating parts would stop the movement. The movement is not necessarily slowed down due to the damping element, but the presence of the damping element may be detected by the sensor unit as a measurable increase in the load of the electrically driven actuator mechanism as the damping element is mechanically deformed. Because of the damping element, which retards the movement of the at least two mechanically cooperating parts, a gradual and slower increase in load will be detected earlier during the movement as the damping element starts to compress, and a difference in load between each sample of the measurements taken by the sensor unit will be smaller than if the movement was abruptly halted at the end position in a non-retarded operation, i.e. with rigid abutting parts without a damping element. In other words, the control unit has more samples to respond to. Thereby, the control unit may more accurately control the electrically driven actuator mechanism to stop movement of the retractable towing hook before a drive current and torque of the electrically driven actuator mechanism reaches harmful levels.

Optionally, the damping element is a mechanically resilient element, such as at least one disc spring, arranged between the at least two mechanically cooperating parts.

The damping element may be mechanically resilient due to the shape of the damping element and/or due to the material of the damping element. An example of mechanical resilience depending on shape may be a disc spring, which may also be known as a conical washer, Belleville washer, coned-disc spring, cupped spring washer, etc. Alternative shapes are conceivable, depending on the position of the damping element and on the shapes of the mechanically cooperating parts whose relative movement the damping element is arranged to retard.

Optionally, the damping element is integrated as a mechanically resilient core in at least one of the at least two mechanically cooperating parts.

The damping element is not necessarily an individual component interposed between the mechanically cooperating parts. It may be integrated into at least one of the mechanically cooperating parts, such as in a gear, e.g. a gear wheel. An inner centre part of the gear wheel may be connected to a drive shaft and an outer circumferential part may cooperate mechanically with another gear wheel, i.e. a gear wheel of another mechanically cooperating part. The mechanically resilient core may be arranged between the inner centre part and the outer circumferential part. As the other mechanically cooperating part hinders movement of the outer circumferential part at the end-of-movement, the mechanically resilient core allows a degree of further retarded rotation of the drive shaft, which gives rise to the measurable increase in the load of the electrically driven actuator mechanism, such that the control unit has time to stop the movement of the electrically driven actuator mechanism before a drive current reaches harmful levels.

Optionally, the damping element is integrated as a mechanically resilient abutment surface of at least one of the at least two mechanically cooperating parts.

As opposed to the mechanically resilient core described above, the damping element may be integrated as a mechanically resilient surface of at least one of the at least two mechanically cooperating parts. The effect is similar in that the movement of the at least two mechanically cooperating parts is retarded by the end-of-movement instead of reaching an abrupt stop.

Optionally, the sensor unit is configured to determine the load as an electric current or electric power of the electrically driven actuator mechanism.

The sensor unit may be configured to measure an electric current through the electrically driven actuator mechanism. The current may optionally be determined as electric power developed by the electrically driven actuator mechanism.

Optionally the sensor unit is configured to determine the load as a mechanical force or torque exerted by the electrically driven actuator mechanism.

The sensor unit may be configured to measure the force or torque exerted by the electrically driven actuator mechanism as the damping element is compressed

Optionally, the electrically driven actuator mechanism comprises an electric motor and the sensor unit is arranged to determine the load of the electrically driven actuator mechanism as a load of the electric motor.

According to a second aspect of the present disclosure, the object is at least partly achieved by a method according to claim 8.

Hence there is provided a method of determining an end-of-movement of a retractable towing hook for a towing hook arrangement according to any one of the embodiments of the first aspect of the present disclosure. The method comprises controlling the electrically driven actuator mechanism to move the towing hook between the stowed position and the deployed position, intermittently determining a load of the electrically driven actuator mechanism by the sensor unit, intermittently communicating the determined load to the control unit and controlling the electrically driven actuator mechanism to stop movement of the retractable towing hook based on the determined load.

"Intermittently" is herein to be understood as determining the load by the sensor unit and communicating the load to the control unit at a selected sampling rate throughout the movement of the towing hook.

The sensor unit is arranged to measure the load of the electrically driven actuator mechanism as the towing hook moves from one end position to the other. Samples of the load are communicated to the control unit. Based on the load determined by the sensor unit, the control unit controls the electrically driven actuator mechanism to stop the movement of the towing hook when certain criteria are fulfilled. Because of the damping element, which retards the movement of the at least two mechanically cooperating parts, a gradual and slower increase in load will be detected earlier during the movement as the damping element starts to compress, and a difference in load between each sample of the measurements taken by the sensor unit will be smaller than if the movement was abruptly halted at the end position in a non-retarded operation, i.e. with rigid abutting parts without a damping element. In other words, the control unit has more samples to respond to. Thereby, the control unit may more accurately control the electrically driven actuator mechanism to stop movement of the retractable towing hook before a drive current and torque of the electrically driven actuator mechanism reaches harmful levels.

Optionally, the movement of the retractable towing hook is stopped when the determined load exceeds a predetermined threshold value.

Thus, the predetermined threshold value is set such that, when the damping element is deformed and the load starts to increase, the control unit is able to stop movement of the retractable towing hook before the drive current reaches harmful levels.

Optionally, the method further comprises intermittently estimating at least one future load and controlling the electrically driven actuator mechanism to stop movement of the retractable towing hook when the at least one estimated future load exceeds a predetermined future threshold value.

The deformation of the damping element leads to a gradual increase in the load of the electrically driven actuator mechanism. Therefore, the control unit may be arranged to predict at least one future load and stop the movement of the towing hook before the determined load reaches the future threshold value. The use of a predicted threshold effectively adds a safety margin to the system. The estimated at least one future load is not necessarily the next sample to be determined by the sensor unit and communicated to the control unit. The estimated at least one future load may be a number of samples ahead in time, such as between two and five samples ahead.

Optionally, the method further comprises intermittently storing the determined load of the electrically driven actuator mechanism in a data storage.

The data storage may be a computer readable medium comprised by the control unit or accessible by the control unit. The data storage may be wirelessly connected to the control unit.

Optionally, the step of intermittently estimating at least one future load uses stored determined loads to estimate future loads.

The stored loads may be loads determined during the present movement. The stored loads may be used to estimate future loads because of the gradual and predictable increase in load as a result of the deformation, i.e. the braking effect, of the damping element.

Optionally, the load is indicative of electric current or electric power used by the electrically driven actuator mechanism.

The sensor unit may measure an electric current through the electrically driven actuator mechanism. The current may optionally be determined as electric power developed by the electrically driven actuator mechanism.

Optionally, the load is indicative of a mechanical force or torque exerted by the electrically driven actuator mechanism.

The sensor unit may measure the force or torque exerted by the electrically driven actuator mechanism as the damping element is compressed

According to a third aspect of the present disclosure, the object is at least partly achieved by a vehicle according to claim 15.

Hence there is provided a vehicle comprising the towing hook according to any one of the embodiments of the first aspect of the present disclosure.

### BRIEF DESCRIPTION OF THE DRAWINGS

Further objects and advantages of, and features of the disclosure will be apparent from the following description of one or more embodiments, with reference to the appended drawings, where:
- Fig. 1: a perspective view of a towing hook arrangement according to the first aspect of the present disclosure.
- Fig. 2a: an exploded view of a towing hook arrangement according to the first aspect of the present disclosure.
- Fig. 2b: a perspective view of a damping element according to an optional embodiment of the present disclosure.
- Fig. 3: a schematic view of a towing hook arrangement according to the first aspect of the present disclosure.
- Fig. 4: a diagram of the load of the electrically driven actuator mechanism of the present disclosure as compared to prior art.
- Fig. 5: a flow chart of a method according to the second aspect of the present disclosure.
- Fig. 6: a diagram illustrating a method of predicting the load according to an embodiment of the second aspect of the present disclosure.
- Figs 7-10: cross-sectional views of a towing hook arrangement according to the present disclosure.
- Fig. 11: a vehicle comprising the towing hook arrangement according to the first aspect of the present disclosure.

### DETAILED DESCRIPTION OF EXAMPLE EMBODIMENTS OF THE INVENTION

The present disclosure is developed in more detail below referring to the appended drawings which show examples of embodiments. The disclosure should not be viewed as limited to the described examples of embodiments. Like numbers refer to like elements throughout the description.

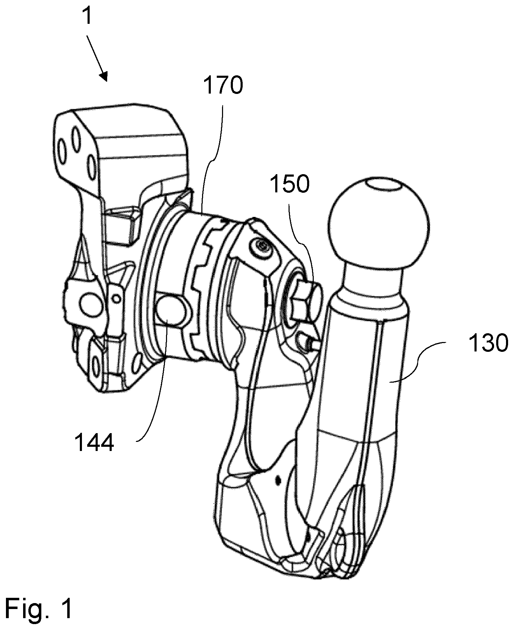

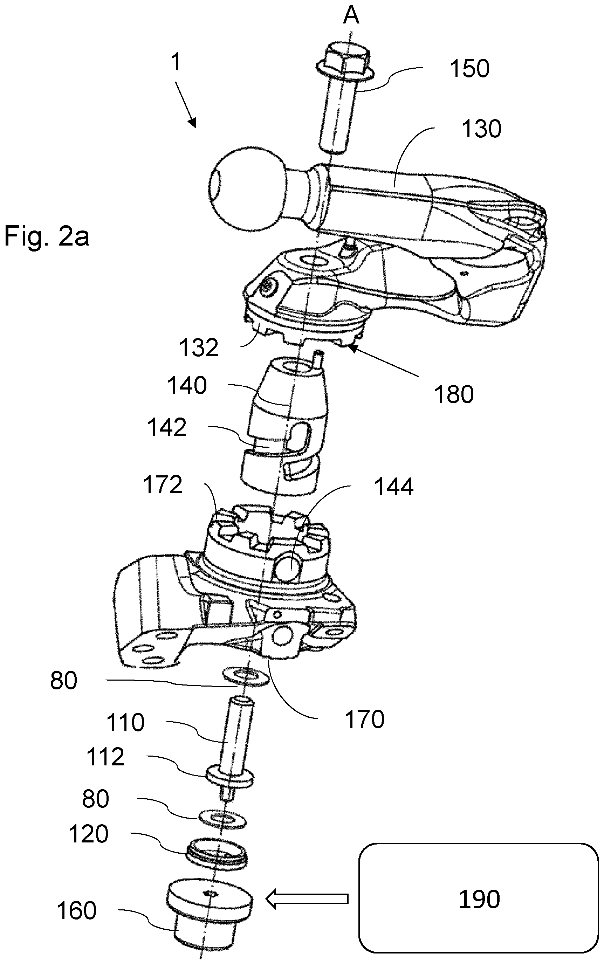

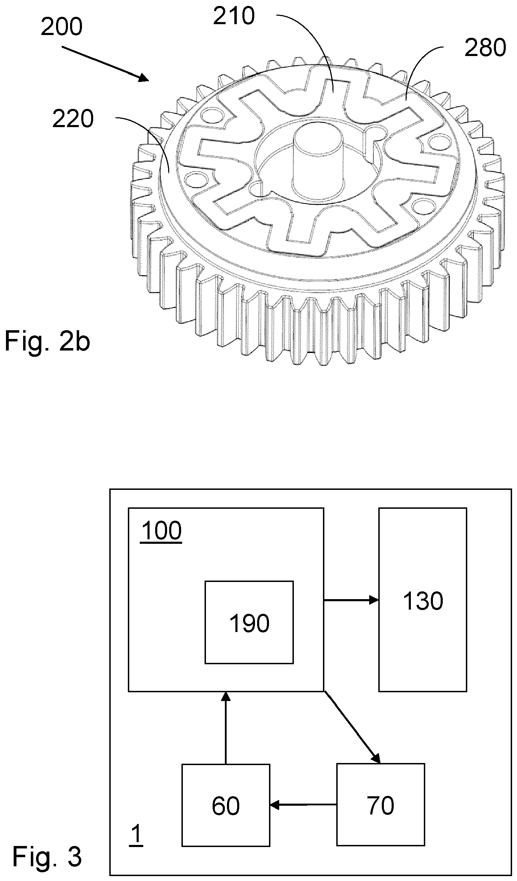

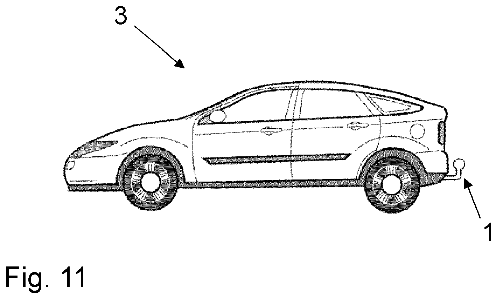

Figs 1 and 2a show a perspective view and an exploded view, respectively, of a towing hook arrangement 1 according to a first aspect of the present disclosure. The towing hook arrangement comprises a retractable towing hook 130 movable between a stowed position and a deployed position. The stowed position and the deployed position are end positions between which the towing hook is configured to move. When arranged on a vehicle 3, as shown in Fig. 11, the towing hook 130 is able to carry or to tow an object in the deployed position. In the stowed position, the towing hook 130 is usually in a concealed space of the vehicle, and in a non-use position. The towing hook arrangement 1 comprises an electrically driven actuator mechanism 100 (Fig. 3) for moving the towing hook 130 between the stowed position and the deployed position.

The electrically driven actuator mechanism 100 comprises at least two mechanically cooperating parts 110, 120, 130, 170 movable into abutment with each other at an end-of-movement between the stowed position and the deployed position. In the illustrated example of Fig. 2a, the mechanically cooperating parts 110, 120, 170 are herein exemplified as a spindle 110, a spindle cap 120 and a housing 170. However, other mechanically cooperating parts may be identified in the towing hook arrangement and used in accordance with the present disclosure. Other non-limiting examples of mechanically cooperating parts are a guide shaft 140 cooperating with a guide pin 144, and towing hook mating teeth 132 cooperating with housing mating teeth 172.

The towing hook arrangement 1 illustrated in Fig. 2a is arranged to move the towing hook 130 in relation to an axis A. The housing 170 is configured to be fixedly attached to e.g. a vehicle 3 (see Fig. 11), e.g. at a crossbeam. An electrical motor 190 is mechanically connected to an actuator 160 to rotate a spindle 110. The spindle 110 may move to a limited degree in the axial directions, but especially a flange 112 limits its movement against the spindle cap 120 and the actuator 160 in one axial direction and against the housing 170 in the other axial direction.

Partly, inside the housing 170, a guide shaft 140 is arranged. The spindle 110 is threadedly engaged with an inside thread of the guide shaft 140. The guide shaft 140 further has a guide track 142 arranged in a substantially helical configuration along its outer circumference. A guide pin 144, which is fixedly arranged in the housing 170 is slidably engaged with the guide track 142. As the spindle 110 rotates, the thread of the spindle interacts with the thread of the guide shaft 140. The guide shaft 140 is thereby urged axially and rotates around the axis A due to the guide pin 144 interacting with the guide track 142.

The towing hook 130 is fixedly connected to the guide shaft 140 by a screw 150. Accordingly, actuation/rotation of the spindle 110 urges the towing hook 130 to move axially and rotationally, as allowed by the guide pin 144 and guide track 142. At one end of the guide track 142, the towing hook 130 is in the deployed position and the towing hook mating teeth 132 are in engagement with the housing mating teeth 172. At the other end of the guide track 142, the towing hook 130 is in the stowed position and the towing hook mating teeth 132 are disengaged from the housing mating teeth 172.

As shown in Fig. 3, the towing hook arrangement 1 further comprises a control unit 60 for controlling the electrically driven actuator mechanism 100 and a sensor unit 70 arranged to determine a load of the of the electrically driven actuator mechanism 100 and to communicate the determined load to the control unit 60. The control unit 60 controls the electrically driven actuator mechanism 100 to move the towing hook 130 between the stowed position and the deployed position. Accordingly, the control unit 60 is also configured to control the electrically driven actuator mechanism 100 to stop movement of the retractable towing hook 130 based on the determined load. The electrically driven actuator mechanism 100 may also comprise an electric motor 190. Alternatively, the electric motor 190 may be separate, but mechanically connected to the electrically driven actuator mechanism 100.

The sensor unit 70 may be configured to determine the load as an electric current or electric power of the electrically driven actuator mechanism 100. Alternatively, the sensor unit 70 may be configured to determine the load as a mechanical force or torque exerted by the electrically driven actuator mechanism 100. The sensor unit may further be arranged to determine the load of the electrically driven actuator mechanism 100 as a load of the electric motor 190 which may be comprised in the electrically driven actuator mechanism 100. The sensor unit 70 may be located in various positions in relation to the electrically driven actuator mechanism 100 or in relation to the electric motor 190 as a matter of design choice, within the scope of the present disclosure. The sensor unit may, for instance, be integrated in the electric motor 190 or in the control unit 60.

The towing hook arrangement 1 further comprises at least one damping element 80, 180, 280 configured to retard relative movement of the at least two mechanically cooperating parts 110, 120, 130, 170 as the two mechanically cooperating parts approach each other by the end-of-movement between the stowed position and the deployed position.

The damping element 80, illustrated in Fig. 2a is a mechanically resilient element, such as a disc spring 80, arranged between the at least two mechanically cooperating parts 110, 120, 170. As will be explained in greater detail below, the damping element 80, 180, 280 according to the present disclosure is arranged to resiliently deform as the at least two mechanically cooperating parts 110, 120, 130, 170 approach each other. The existence of the damping element 80, 180, 280 causes the electrically driven actuator mechanism 100 to experience a gradually increasing load at the end-of-movement of the at least two mechanically cooperating parts 110, 120, 130, 170 as the damping element 80. 180, 280 starts to deform. The increased load may be measured and determined by the sensor unit 70 and communicated to the control unit 60.

The damping element 80, 180, 280 may alternatively, or in addition, be a mechanically resilient core 280 of at least one of the at least two mechanically cooperating parts as shown in Fig. 2b, which illustrates an exemplary gear wheel 200. An inner centre part 210 of the gear wheel 200 is configured to be connected to a drive shaft (not shown) and an outer circumferential part 220 is configured to cooperate mechanically with another gear wheel (not shown), i.e. a gear wheel of another mechanically cooperating part. The mechanically resilient core 280 may be arranged between the inner centre part 210 and the outer circumferential part 220. As the other mechanically cooperating part hinders movement of the outer circumferential part 220 at the end-of-movement, the damping element 280, i.e. the mechanically resilient core 280 allows a degree of further (retarded) rotation of the drive shaft, which gives rise to a measurable increase in the load of the electrically driven actuator mechanism 100, such that the control unit 60 has time to respond and to stop the movement of the electrically driven actuator mechanism 100 before a drive current and/or torque reaches potentially harmful levels. The example gear wheel 200 shown in Fig. 2b is not comprised in the exemplary towing hook arrangement 1 shown in Fig. 2a but serves as an example of how the damping element 80, 180, 280 may be arranged in various configurations without departing from the scope of the present disclosure.

As an alternative or a complement, the damping element may be integrated as a mechanically resilient abutment surface 180 of at least one of the at least two mechanically cooperating parts 130, 170. In Fig. 2a such a resilient abutment surface 180 may for instance be arranged on the towing hook teeth 132 and/or on the housing teeth 172. The effect is similar to the examples of the disc spring 80 and the mechanically resilient core 280 in that the movement of the at least two mechanically cooperating parts 130, 170, exemplified by the towing hook 130 and the housing 170, is retarded by the end-of-movement instead of suddenly reaching an abrupt stop.

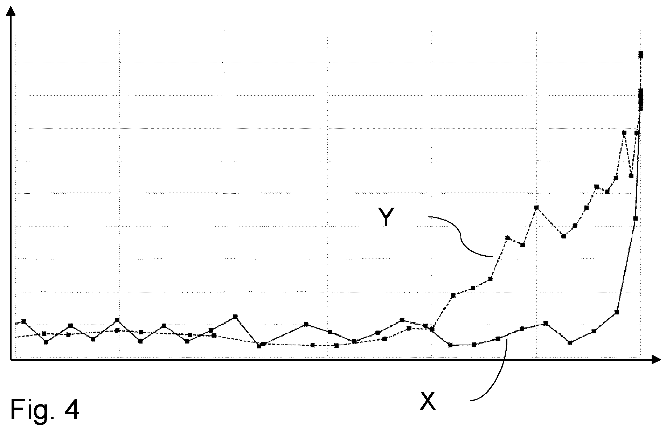

In the diagram of Fig. 4, the load is shown on the vertical axis and the horizontal axis shows the relative positions of the mechanically cooperating parts 110, 120, 130, 170 moving towards an end position at the rightmost end of the diagram. The points in the diagram represent measurement samples of the load.

A prior art curve X illustrates how the load is substantially constant during a major part of the movement between the end positions from left to right in the diagram. Close to the end position to the right, the load increases rapidly as rigid cooperating parts of the system come into abutment with each other, forcing a stop in the system and causing a drive current peak and a possibly harmful torque in the prior art actuator mechanism. As shown in the diagram, the prior art curve X rises from the constant load to a peak load in only two measurement samples, giving the prior art control unit very little time to respond.

The present disclosure is represented by a damped curve Y. It can be seen that in a towing hook arrangement according to the present disclosure, the load starts to rise earlier in the movement, as the damping element 80, 180, 280 starts to deform resiliently due to interaction with the movement of the at least two mechanically cooperating parts 110, 120, 130, 170. As shown in the example diagram, around 15 measurement samples at regular time intervals are determined from the start of the rise until the end position at the right is reached, giving the control unit 60 time to respond to the rise in load and to stop the movement of the towing hook 130.

In addition, the increase in load is gradual and predictable. In the illustrated example the increase is substantially linear. It is therefore possible to estimate and predict at least one future load such that an additional safety margin is introduced whereby the control unit 60 may stop the movement when an estimated future load exceeds a predetermined future threshold value, as will be further explained below.

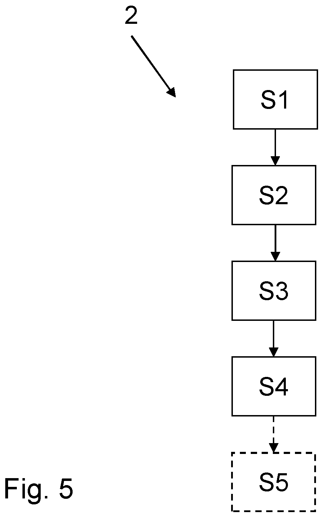

Fig. 5 shows a flow chart of a method 2 of determining an end-of-movement of the retractable towing hook 130 for the towing hook arrangement 1 according to any one of embodiments of the first aspect of the present disclosure. The method 2 comprises controlling S1 the electrically driven actuator mechanism 100 to move the towing hook 130 between the stowed position and the deployed position, as previously described. The method 2 further comprises intermittently determining S2 the load of the electrically driven actuator mechanism 100 by the sensor unit 70 and intermittently communicating S3 the determined load to the control unit 60. Based on the determined load, the method 2 further comprises controlling S4 the electrically driven actuator mechanism 100 to stop movement of the retractable towing hook 130.

The movement of the retractable towing hook 130 may be stopped if the determined load exceeds a predetermined threshold value. The predetermined threshold value may be chosen such that the control unit 60 has time to respond and stop the movement of the retractable towing hook 130 before the mechanically cooperating parts 110, 120, 130, 170 come to a hard stop. A "hard stop" could occur when further movement is prevented due to abutment of rigid parts of the electrically driven actuator mechanism 100 or due to the load of the electrically driven actuator mechanism 100 exceeding a maximum threshold value at which the electric motor 190 fails or is automatically switched off as a safety measure.

The method 2 may alternatively further comprise intermittently estimating S5 at least one future load, and controlling the electrically driven actuator mechanism 100 to stop movement of the retractable towing hook 130 if the at least one estimated future load exceeds a predetermined future threshold value. The method 2 may further comprise intermittently storing the determined load of the electrically driven actuator mechanism 100 in a data storage, such as a computer readable medium, to be accessible by the control unit 60. The at least one future load may be estimated by the control unit 60 by accessing and using the stored determined loads.

Since the deformation of the damping element 80, 180, 280 leads to a predictable increase in the load of the electrically driven actuator mechanism 100, the control unit 60 may be arranged to predict at least one future load and to stop the movement of the towing hook before the determined load reaches the future threshold value. The use of a predicted threshold could be used to add a safety margin to the system. The estimated at least one future load is not necessarily the next measurement sample to be determined by the sensor unit and communicated to the control unit 60. The estimated at least one future load may be a number of measurement samples ahead in time, such as between two and five measurement samples ahead.

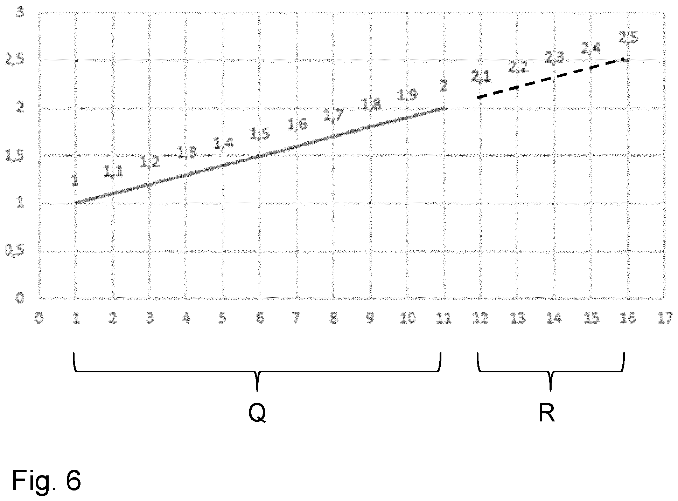

Fig. 6 shows a diagram illustrating a manner of predicting the load. The vertical axis represents the load of the electrically driven actuator mechanism 100 and the horizontal axis shows a number of intermittent consecutive measurement samples from 1 to 16. An interval Q, i.e. samples 1-11, represents determined loads and an interval R represents estimated future loads 12-16. Since the increase in load in a particular configuration of a retarded towing hook arrangement is predictable (in Fig. 6 the increase is linear), at least one future load, as the damping element 80, 180, 280 is deformed by the movement of the at least two mechanically cooperating parts 110, 120, 130, 170, may be estimated accurately based on a number of stored determined loads. The estimation may, for instance, be based on the last five stored determined loads, but any at least two stored determined loads may suffice to estimate the at least one future load.

As exemplified in Fig. 6, each new determined load (sample) results in a load increase of 0.1. Based on the determined load, the control unit 60 may estimate that sample 12 will be 2.1, sample 13 will be 2.2, etc. When the sensor unit 70 has determined the load by sample 11 and communicated the load to the control unit 60, the control unit 60 may estimate that sample 16 will be 2.5. If the predetermined future load threshold is for instance 2.4, the estimated future load exceeds the future load threshold by 0.1. The control unit 60 would respond immediately and switch off the electrically driven actuator mechanism 100 to stop the movement of the towing hook 130. Thereby, a situation where the towing hook 130 is moving too fast at the end-of-movement is avoided.

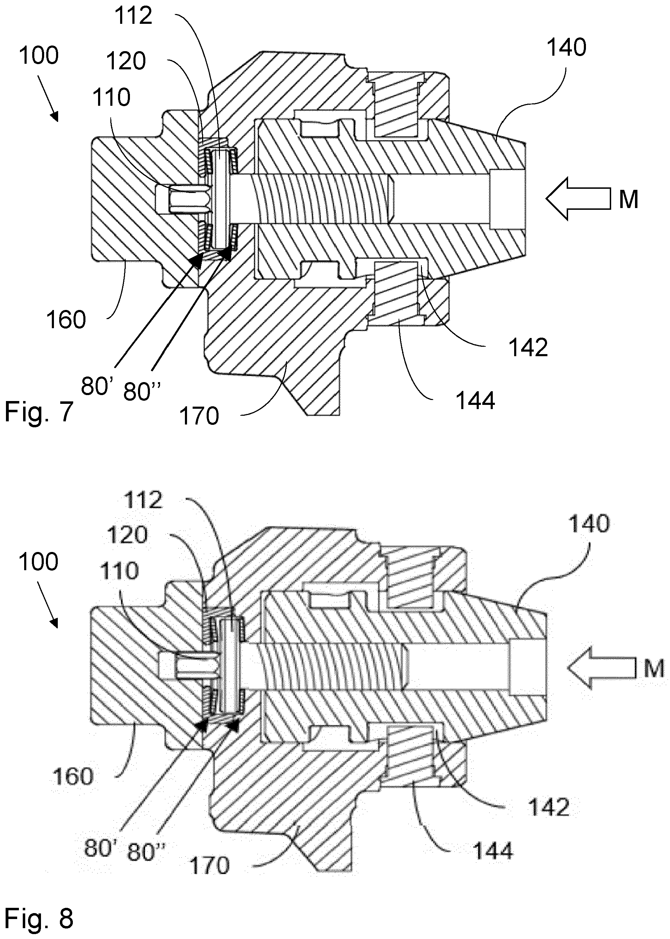

An example according to the first and the second aspects of the present disclosure will now be described in conjunction with Figs 7-10, which show a cross-section of a part of the towing hook arrangement 1. Fig 7 illustrates the towing hook arrangement 1 as the guide shaft 140 moves axially in the direction of the arrow M towards the deployed position. Two damping members 80', 80", in the form of disc springs, are arranged on each side of a flange 112 of the spindle 110. When the guide shaft 140 stops the axial movement because it is fixed to the towing hook 130 which comprises towing hook mating teeth 132 that abut the housing mating teeth 172, the rotation of the spindle 110 forces the spindle 110 towards the housing 170. If it were not for the right damping member 80" in Fig. 7, the flange 112 of the spindle 110 would come to an abrupt stop against the housing 170. In addition, the spindle 110 could be wedged and stuck against the housing 170 due to the threads of the spindle 110 interacting with the threaded inside of the guide shaft 140. However, thanks to the right damping member 80", the load of the electrically driven actuator mechanism 100 increases gradually as the right damping member 80" is resiliently deformed by the flange 112 of the spindle 110 by the end-of-movement. Therefore, the control unit 60 is able to switch off the electrically driven actuator mechanism 100 and stop the movement of the towing hook 130 and the spindle 110 in time to avoid such a situation.

Fig. 8 illustrates how the towing hook 130 (not shown) has arrived at the deployed position. The right damping member 80" is deformed (flat), but the spindle 110 is not stuck because the movement was stopped in time by the control unit 60.

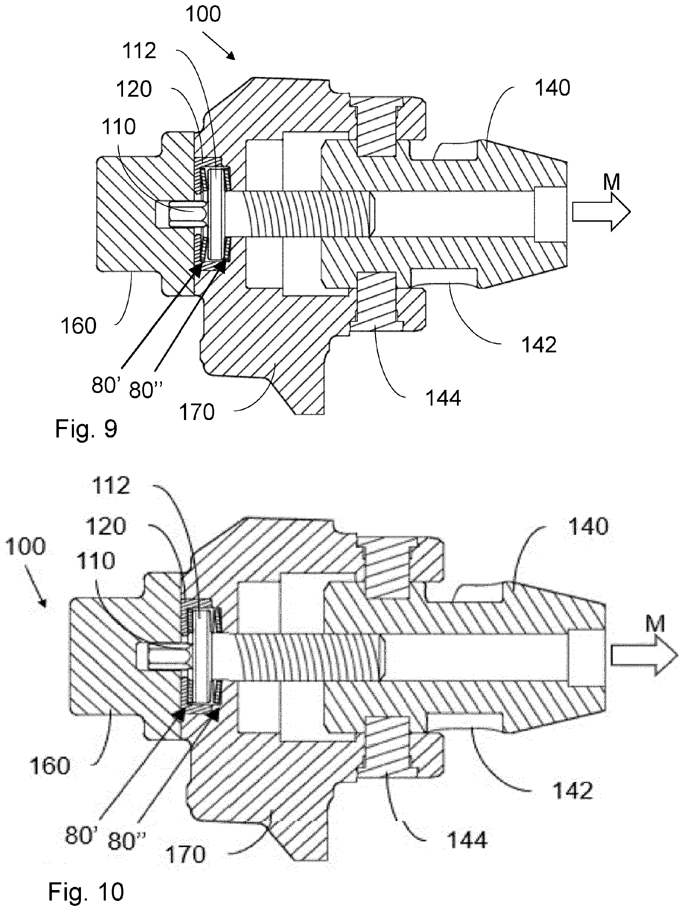

Fig. 9 illustrates the towing hook arrangement 1 as the guide shaft 140 moves axially in the direction of the arrow M towards the stowed position. When the guide shaft 140 stops the axial movement because the guide pin 144 has reached an end of the guide track 142, the rotation of the spindle 110 forces the spindle 110 towards the spindle cap 120. The spindle cap 120 is prevented from axial movement. If it were not for the left damping member 80' in Fig 9, the spindle 110 would come to an abrupt stop against the spindle cap 12. In addition, the spindle 110 could be wedged and stuck against the spindle cap 120 due to the threads of the spindle 110 interacting with the threaded inside of the guide shaft 140. However, thanks to the left damping member 80', the load of the electrically driven actuator mechanism 100 increases gradually as the left damping member 80' is resiliently deformed by the flange 112 of the spindle 110 by the end-of-movement. Therefore, the control unit 60 is able to switch off the electrically driven actuator mechanism 100 and stop the movement of the towing hook 130 and the spindle 110 in time to avoid such a situation.

Fig. 10 illustrates how the towing hook 130 (not shown) has arrived at the stowed position. The left damping member 80' is deformed (flat), but the spindle 110 is not stuck because the movement was stopped in time by the control unit 60.

Fig. 11 exemplifies a vehicle 3 according to the third aspect of the present disclosure comprising a towing hook arrangement 1 according to the first aspect of the present disclosure.

## Claims

1. A towing hook arrangement (1) for determining an end-of-movement of a retractable towing hook (130), the towing hook arrangement (1) comprising
- a retractable towing hook (130) movable between a stowed position and a deployed position,
- an electrically driven actuator mechanism (100) for moving the towing hook (130) between the stowed position and the deployed position, the electrically driven actuator mechanism (100) comprising at least two mechanically cooperating parts (110, 120, 130, 170) movable into abutment with each other at an end-of-movement between the stowed position and the deployed position,
- a control unit (60) for controlling the electrically driven actuator mechanism (100), wherein the towing hook arrangement (1) further comprises
- a sensor unit (70) arranged to determine a load of the electrically driven actuator mechanism (100) and to communicate the determined load to the control unit (60), and
- at least one damping element (80, 180, 280) configured to retard relative movement of the at least two mechanically cooperating parts (110, 120, 130, 170) as the two mechanically cooperating parts (110, 120, 130, 170) approach each other at the end-of-movement between the stowed position and the deployed position.

2. The towing hook arrangement (1) according to claim 1, wherein the damping element (80) is a mechanically resilient element, such as at least one disc spring, arranged between the at least two mechanically cooperating parts (110, 120, 170).

3. The towing hook arrangement (1) according to claim 1, wherein the damping element (280) is integrated as a mechanically resilient core (280) in at least one of the at least two mechanically cooperating parts (200).

4. The towing hook arrangement (1) according to claim 1, wherein the damping element (180) is integrated as a mechanically resilient abutment surface (180) of at least one of the at least two mechanically cooperating parts (130, 170).

5. The towing hook arrangement (1) according to any one of the preceding claims, wherein the sensor unit (70) is configured to determine the load as an electric current or electric power of the electrically driven actuator mechanism (100).

6. The towing hook arrangement (1) according to any one of claims 1-4, wherein the sensor unit (70) is configured to determine the load as a mechanical force or torque exerted by the electrically driven actuator mechanism (100).

7. The towing hook arrangement (1) according to any one of claims 1-6, wherein the electrically driven actuator mechanism (100) comprises an electric motor (190) and the sensor unit (70) is arranged to determine the load of the electrically driven actuator mechanism (100) as a load of the electric motor (190).

8. A method (2) of determining an end-of-movement of a retractable towing hook (130) for a towing hook arrangement (1) according to any one of the claims 1-7, wherein the method (2) comprises
- controlling (S1) the electrically driven actuator mechanism (100) to move the towing hook (130) between the stowed position and the deployed position,
- intermittently determining (S2) a load of the electrically driven actuator mechanism (100) by the sensor unit (70),
- intermittently communicating (S3) the determined load to the control unit (60),
- controlling (S4) the electrically driven actuator mechanism (100) to stop movement of the retractable towing hook (130) based on the determined load.

9. The method (2) according to claim 8, wherein the movement of the retractable towing hook (130) is stopped when the determined load exceeds a predetermined threshold value.

10. The method (2) according to claim 8, further comprising intermittently estimating (S5) at least one future load, and controlling the electrically driven actuator mechanism (100) to stop movement of the retractable towing hook (130) when the at least one estimated future load exceeds a predetermined future threshold value.

11. The method (2) according to claim 10, further comprising intermittently storing the determined load of the electrically driven actuator mechanism (100) in a data storage.

12. The method (2) according to claim 11, wherein the step of intermittently estimating at least one future load uses stored determined loads to estimate future loads.

13. The method (2) according to any one of the claims 8-12, wherein the load is indicative of electric current or electric power used by the electrically driven actuator mechanism (100).

14. The method (2) according to claim 8-12, wherein the load is indicative of a mechanical force or torque exerted by the electrically driven actuator mechanism (100).

15. A vehicle (3) comprising the towing hook arrangement (1) according to any one of the claims 1-7.
